# EUROPEAN PATENT SPECIFICATION

(11) **EP 1 183 930 B1**
(45) Date of publication and mention of the grant of the patent: **17.05.2017**
(21) Application number: 01203337.9
(22) Date of filing: 31.08.2001
(51) Int. Cl.: A01D 33/08, B07B 1/15

(54) **Device for separating tare from agricultural products and method for cleaning said agricultural products**
Vorrichtung zum Trennen von Erdklumpen oder Steinen von landwirtschaftlichen Produkten und Verfahren zur Reinigung landwirtschaftlicher Produkte
Dispositif pour séparer les mots de terre ou des pierres des produits agricoles et méthode de nettoyage de ces produits agricoles

(30) Priority: 04.09.2000 NL 1016090
(43) Date of publication of application: 06.03.2002
(73) Proprietor: Miedema Landbouwwerktuigenfabriek B.V., 8831 XA Winsum (NL)
(72) Inventor: Wondergem, Jan, 8607 KC Sneek (NL)
(74) Representative: Hostens, Veerle

(56) References cited:
- EP-A- 0 673 593
- FR-A- 2 520 334
- US-A- 5 372 546

## Description

The invention relates to a device for separating tare, such as for example mud, stones, tops and the like, from agricultural products such as potatoes, onions and the like, comprising a frame, in which two substantially parallel rollers are rotatably mounted, and wherein a spiral is fitted around at least part of said rollers.

Such a device is known from, for example, British patent application GB 2 152 853, which discloses a so-called spiral screen. Potatoes and materials adhering thereto, such as soil and stones, are carried over the device by the rollers, which all rotate in the same direction. The spirals remove the soil and the stones from the potatoes, after which they fall through the spirals and the rollers. Larger stones are moved to the side of the device by the spiral springs and subsequently removed.

In practice, in particular when the agricultural products are harvested in wet conditions and a great deal of soil adheres to the products, a significant portion of said soil lands in the space between the outer surface of the rollers and the windings of the spirals. After some time, the spirals fill up with soil and the effect of the spiral screen is lost. This means that the spiral screen must be stopped and manually cleaned at regular intervals, which takes a great deal of time and effort.

US 5,372,546 relates to a sugar beet harvestor having a grab roller assembly which is equipped with a cleaner for removing mud and debris from the rollers of the grab roller assembly. The cleaner has a pair of rails that movably support a traveler. Downwardly directed blades attached to the traveler have lower ends located in close proximity to the rollers of the grab roller assembly. A reversible power driven drive operates to reciprocate the traveler along the rails thereby moving the blades relative to the outer surfaces of the rollers so that mud and debris on the rollers are removed therefrom.

FR 2 520 334 relates to a self-cleaning device for a Archimedes screw.

The object of the present invention is to provide a device and a method wherein the above drawback is eliminated, or at least significantly reduced.

To this end, the device according to the invention is characterized as defined in claim 1.

The scraper is capable of cleaning the spaces between the windings in an effective manner and possibly be moved along the spiral by mating with said windings, without driving means being required for that purpose. Furthermore, it is not necessary in principle to stop the device during the cleaning operation.

In a very effective embodiment, at least one rail is mounted above and substantially parallel to said rollers, on which rail a guide element is translatably mounted, and wherein the scraper is fixed to said guide element or forms part thereof. The scraper can be placed between the windings at one end of a spiral, which is positioned under the guide element at a particular point, and be lifted after the scraper has been driven to the other side of the spiral, for example by the spiral itself, or at least be moved out of the reach of said windings, and be moved to a next spiral.

In order to prevent the scraper from breaking off, for example on a stone which has become wedged between two windings, the scraper, or at least that part which is present between the windings and the guide element during operation, is preferably resilient.

The invention furthermore relates to an assembly which is apparently intended for being fitted on or in a device according to the introductory paragraph, which assembly comprises a scraper which, after being fitted, is capable of translating movement in a direction substantially parallel to said rollers, one end of which scraper can be placed between the windings of at least part of the spirals. In addition to that, the invention relates to a method of cleaning a device as described in the introductory paragraph, wherein said rollers and said spirals are rotated and wherein the end of a scraper is placed between the windings of one of said spirals, wherein the scraper is subsequently translated in a direction substantially parallel to the roller concerned and wherein the scraper (11), once it has cleaned a first spiral (5), is moved to a next spiral (5).

The invention will now be explained in more detail by means of a preferred embodiment thereof as shown in the appended figures.
Fig. 1 is a top plan view of a spiral screen.
Figs. 2 and 3 are a top plan view and a side view, respectively, of a guide element to which a scraper is connected.
Figs. 4 and 5 are a side view and a top plan view, respectively, of an assembly for guiding and controlling the scraper according to Figs. 2 and 3.

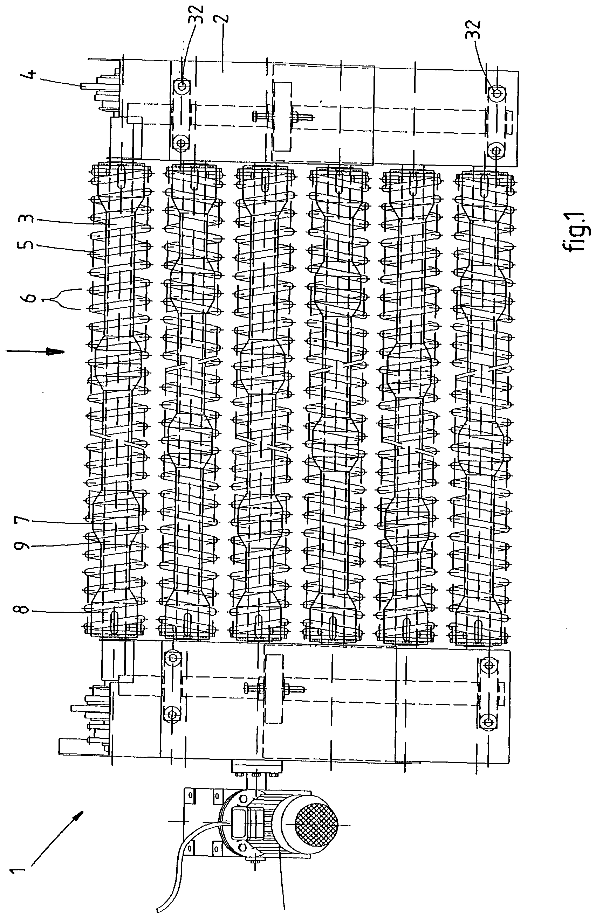

Fig. 1 is a top plan view of a spiral screen 1 comprising a frame 2 in which, in this specific embodiment, six parallel rollers 3 are rotatably mounted. To this end, the rollers 3 are mounted in bearings on either side in a linkage 4, by means of which the spacing between the rollers 3 can be varied in an even manner and be adapted to specific products or circumstances. A spiral 5 is fitted around each of the rollers 3, with the direction of the windings 6 of each roller being opposite to the direction of the windings of a roller adjacent thereto. Each of the rollers 3 is provided with thickenings 7, 8, which effect a concentric position of the spirals 5 relative to the rollers 3. Thickenings 7, 8 include conical portions 9, which ensure that stones and the like being wedged between windings 6 will be forced outwards, that is, away from the central axis of rollers 3. Rollers 3 can all be driven in the same direction by means of an electric motor 10 and a series of chains and chain wheels (not shown). When potatoes, for example, to which dirt and stones adhere, are charged at the supply side of the spiral screen 1, the windings 6 and the cavities between spirals 5 and rollers 3 will fill up after some time, and the spiral screen 1 will lose its effectiveness.

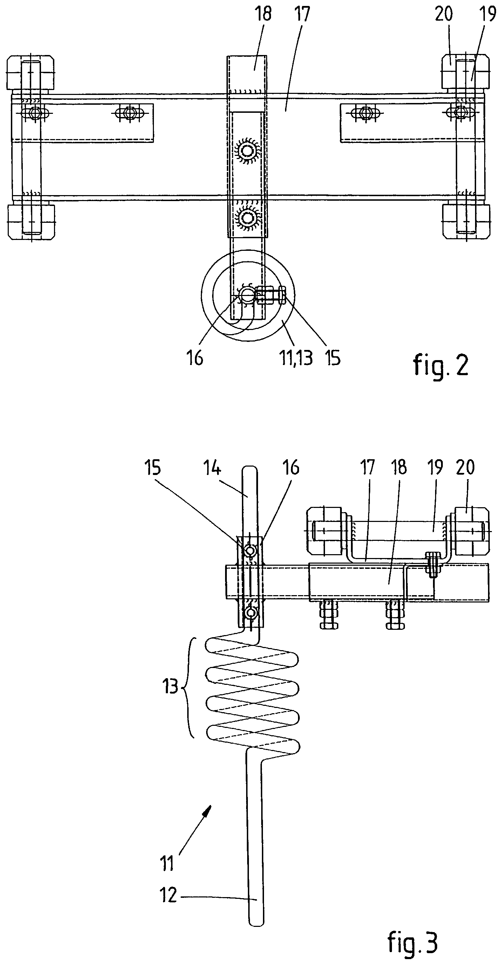

Figs. 2 and 3 show a scraper 11 formed of a bar of, for example, steel. As will be explained in more detail hereafter, the end 12 of scraper 11 is positioned between the windings 6 of one of the spirals 5 at all times during the cleaning of the spiral screen 1. In order to prevent the scraper deforming plastically or breaking off on a stone that is wedged very tightly between windings 6, scraper 11 is made resilient by using a concentric spiral 13. It is also possible, of course, to make the spiral eccentric or to use windings whose central axis extends perpendicularly to the central axis of end 12. There are also other ways of obtaining a resilient scraper, of course, for example by using a strong but resilient material, such as certain plastics.

If the scraper 11 is made of a hard material, it is preferable to envelop at least the end 12 with a soft material, such as (foam) rubber, so that the agricultural products are not damaged, or at least less easily damaged, upon coming into contact with said end 12.

The upper end 14 of scraper 11 is fixed in a cylindrical bush 16 by means of bolts 15, which bush forms part of a guide element, for example a slide or a trolley 17. The height of the scraper 11 can be adjusted by unscrewing the bolts 15. In addition, the spacing between the scraper 11 and the trolley 17 can be varied by means of a telescope construction 18.

Trolley 17 is furthermore provided with two axles 19, with two plastic wheels 20 being mounted on either side thereof, by means of which wheels the trolley 17 can translate along two guide rails 21 in a direction perpendicularly to the direction of transport (indicated by means of an arrow in the figures) of spiral screen 1.

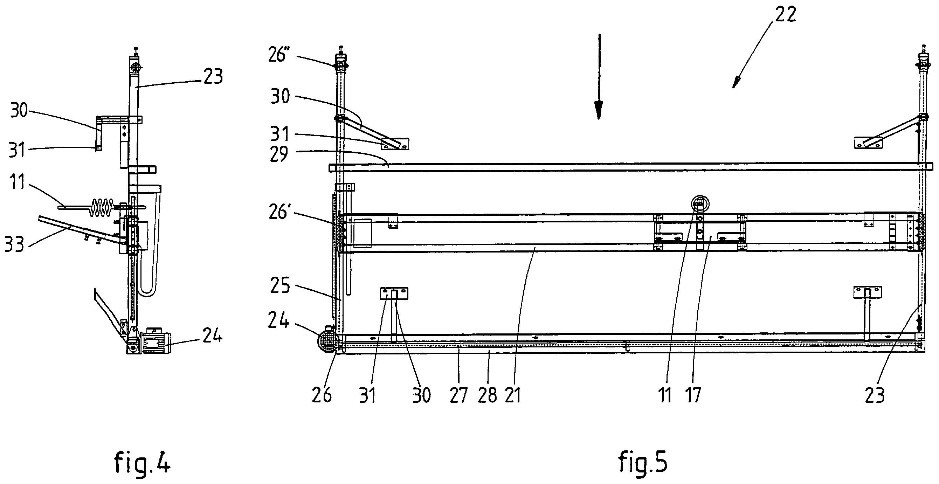

As is shown in Figs. 4 and 5, guide rails 21 form part of an assembly 22. Said assembly 22 comprises a second set of guide rails 23, which extend parallel to the direction of transport of spiral screen 1. The first set of guide rails 21 can be moved along the second set of guide rails 23 by means of a servo motor 24 and an assembly of a chain 25 and chain wheels 26, 26' and 26''. In addition this makes it possible to keep the scraper 11 positioned above the central axis of one of the spirals 5, at least within the range thereof, when said spiral is being cleaned.

The movement of chain wheel 26 is transmitted, by means of a shaft 27, to a chain and chain wheels that are substantially identical to the aforesaid chain 25 and chain wheels 26. Shaft 27 extends through a hollow beam 28, which, together with a cross beam 29, gives assembly 22 its stiffness. Furthermore, four rods 30 are provided, at the end of which a mounting plate 31 is present, by means of which the assembly can be mounted on frame 2 of spiral screen 1 at points of attachment 32 (see Fig. 1).

During operation of the spiral screen 1, the guide rails 21 and the trolley 17 are moved in the direction of transport of the spiral screen 1 by means of servo motor 24, until scraper 11 is positioned between the windings 6 at the end of one of the spirals. In this embodiment, the position of the scraper with respect to the central axis of rollers 3 is determined by means of a sensor, such as an inductive switch (not shown) present at the end of a fixing rod 33, which is attached to guide rails 21 at a point outside rollers 3. The end 12 of scraper 11 is thus caught between the windings 6 of the spiral 5 concerned. Then the scraper is fixed in position in the direction of transport of the spiral screen 1, which takes place on its own accord in this case by stopping servo motor 24, and moved to the other end of the spiral 5 by said windings 6. During said movement, the spirals 5 are cleaned by the scraper 11.

Once scraper 11 has reached said other end, which can be established by means of for example sensors (such as inductive sensors that respond to the presence of trolley 17 or of a cam or projection on trolley 17) on both ends of the guide rails 21, guide rails 21, and thus trolley 17 and scraper 11, are moved to the next roller 5 by means of servo motor 24, again until the end 12 of scraper 11 is positioned above the central axis of said roller 3. Since the direction of the windings 6 of each of the spirals 5 is opposite to the direction of the spiral 5 adjacent thereto, the end 12 of scraper 11 is again caught in the windings 6 of spiral 5 and moved to the other side of spiral screen 1 by said spiral 5. Preferably, also the ends of the second guide rails 23 are provided with sensors (such as the above-described inductive sensors, which respond to the presence of the trolley 17 or of a part thereof) at their ends, so that it can be automatically established that a cleaning cycle has ended or, on the contrary, can start.

From the foregoing it will be apparent that the invention provides, in a relatively simple manner, an effective device and method for cleaning spiral screens and comparable devices. In addition, existing devices can be converted into a device according to the invention at relatively low cost.

Depending on the design of the spiral screen, and in particular on the shape of the spirals and the rollers, the end of the scraper may for example be provided with one or more projections, which may or may not be flexible, which are positioned in the space between the spiral and the roller during the cleaning operation and which enhance the cleaning action. Furthermore, the scraper may contain or comprise a pipe, by means of which a gas, for example, or a liquid can be squirted into said space under a high pressure.

The invention is not restricted to the embodiments as described above, which can be varied without departing from the scope of the claims, of course. Thus the scraper may be disposed under the spiral screen, whereby the scraper is preferably fixed to the guide element at an angle, so that said element is not positioned directly under the spiral that is just being cleaned. Furthermore, it is possible, for example, to fit the spiral screen with more than one scraper.

## Claims

1. Device (1) for separating tare, such as for example mud, stones, tops and the like, from agricultural products such as potatoes, onions and the like, comprising a frame (2) in which two substantially parallel rollers (3) are rotatably mounted, and wherein a spiral is fitted around at least part of said rollers (3), wherein said device (1) comprises a scraper (11) which is translatable in a direction substantially parallel to said rollers (3), wherein at least one rail (21) is mounted above and substantially parallel to said rollers (3), on which rail a guide element (17) is translatably mounted, and wherein the scraper (11) is fixed to said guide element (17) or forms part thereof, **characterized in that** the direction of the windings (6) of adjacent spirals (5) is opposite and **in that** one end (12) of said scraper (11) is placeable between the windings (6) of at least some of said spirals (5) and said rail (21) is translatable such that the scraper (11) is moveable from one roller to another.

2. Device (1) according to claim 1, wherein sensors are provided to establish whether the scraper (11) has reached one end of the rail (21) or has approached said rail (21) to a predetermined distance therefrom.

3. Device (1) according to claim 2, wherein said rail (21) is translatable in a direction substantially perpendicularly to the direction of said rollers (3).

4. Device (1) according to claim 3, wherein sensors are provided to establish whether the scraper (11) has reached one of the outermost rollers (3) or has approached said roller to a predetermined distance therefrom.

5. Device (1) according to any one of the preceding claims, wherein said scraper (11) is resilient.

6. Device (1) according to claim 5, wherein said scraper (11) comprises a bar material or consists thereof, in which a spiral (13) is incorporated.

7. Assembly (22) adapted to be fitted on or in a device (1) according to the preamble of claim 1, comprising at least one rail (21) adapted to be mounted above and substantially parallel to said rollers (3), on which rail a guide element (17) is translatably mounted, which assembly (22) comprises a scraper (11) which, after being fitted, is translatable in a direction substantially parallel to said rollers (3), one end (12) of which scraper (11) is placeable between the windings (6) of at least part of the spirals (5) , said rail (21) being translatable such that the scraper is movable from on roller to the other.

8. Method of removing dirt, such as for example mud, stones, tops and the like, which is present between the windings (6) of the spirals (5) of a device (1) according to the preamble of claim 1, comprising at least one rail (21) mounted above and substantially parallel to said rollers (3), on which rail a guide element (17) is translatably mounted, **characterized in that** said rollers (3) and said spirals (5) are rotated, the end (12) of a scraper (11) is placed between the windings (6) of one of said spirals (5), and the scraper (11) is driven by the spiral (5) concerned and **in that** the direction of the windings (6) of each of said spirals (5) is opposite to the direction of the windings (6) of the spirals (5) adjacent to said spiral (5), and the scraper (11), once it has cleaned a first spiral (5), is moved to a next spiral (5).

## Patentansprüche

1. Vorrichtung (1) zum Trennen von Fremdgut, wie beispielsweise Schlamm, Steinen, Kraut und dergleichen, von landwirtschaftlichen Produkten, wie Kartoffeln, Zwiebeln und dergleichen, umfassend einen Rahmen (2), in dem zwei im Wesentlichen parallele Walzen (3) drehbar montiert sind, und wobei eine Spirale um mindestens einen Teil der Walzen (3) geführt ist, wobei die Vorrichtung (1) einen Schaber (11) umfasst, der in eine Richtung verschiebbar ist, die im Wesentlichen parallel zu den Walzen (3) ist, wobei mindestens eine Schiene (21) oberhalb und im Wesentlichen parallel zu den Walzen (3) montiert ist, wobei ein Führungselement (17) auf der Schiene verschiebbar montiert ist, und wobei der Schaber (11) an dem Führungselement (17) befestigt ist oder einen Teil davon bildet, **dadurch gekennzeichnet, dass** die Richtung der Wicklungen (6) von benachbarten Spiralen (5) entgegengesetzt ist, und dass ein Ende (12) des Schabers (11) zwischen den Wicklungen (6) von mindestens einigen der Spiralen (5) platzierbar ist und die Schiene (21) derart verschiebbar ist, dass der Schaber (11) von einer Walze zu einer anderen bewegbar ist.

2. Vorrichtung (1) nach Anspruch 1, wobei Sensoren bereitgestellt werden, um festzustellen, ob der Schaber (11) ein Ende der Schiene (21) erreicht hat oder sich der Schiene (21) bis zu einem vorbestimmten Abstand dazu genähert hat.

3. Vorrichtung (1) nach Anspruch 2, wobei die Schiene (21) in eine Richtung verschiebbar ist, die im Wesentlichen senkrecht zu der Richtung der Walzen (3) ist.

4. Vorrichtung (1) nach Anspruch 3, wobei Sensoren bereitgestellt werden, um festzustellen, ob der Schaber (11) eine der äußersten Walzen (3) erreicht hat oder sich der Walze bis zu einem vorbestimmten Abstand dazu genähert hat.

5. Vorrichtung (1) nach einem der vorhergehenden Ansprüche, wobei der Schaber (11) federnd ist.

6. Vorrichtung (1) nach Anspruch 5, wobei der Schaber (11) ein Stabmaterial umfasst oder daraus besteht, in das eine Spirale (13) eingearbeitet ist.

7. Zusammenstellung (22), die adaptiert ist, um auf oder in eine Vorrichtung (1) gemäß dem Oberbegriff des Anspruchs 1 gebaut zu werden, umfassend mindestens eine Schiene (21), die adaptiert ist, um oberhalb und im Wesentlichen parallel zu den Walzen (3) montiert zu werden, wobei ein Führungselement (17) verschiebbar auf der Schiene montiert ist, wobei die Zusammenstellung (22) einen Schaber (11) umfasst, der, nach der Montage, in eine Richtung im Wesentlichen parallel zu den Walzen (3) verschiebbar ist, wobei ein Ende (12) des Schabers (11) zwischen den Wicklungen (6) von mindestens einem Teil der Spiralen (5) platzierbar ist, wobei die Schiene (21) derart verschiebbar ist, dass der Schaber von einer Walze zu der anderen bewegbar ist.

8. Verfahren zum Entfernen von Schmutz, wie beispielsweise Schlamm, Steinen, Kraut und dergleichen, der zwischen den Wicklungen (6) der Spiralen (5) einer Vorrichtung (1) gemäß dem Oberbegriff von Anspruch 1 vorhanden ist, umfassend mindestens eine Schiene (21), die oberhalb und im Wesentlichen parallel zu den Walzen (3) montiert ist, wobei ein Führungselement (17) verschiebbar auf der Schiene montiert ist, **dadurch gekennzeichnet, dass** die Walzen (3) und die Spiralen (5) gedreht werden, das Ende (12) eines Schabers (11) zwischen den Wicklungen (6) von einer der Spiralen (5) platziert ist, und der Schaber (11) durch die betreffende Spirale (5) angetrieben wird, und dass die Richtung der Wicklungen (6) von jeder der Spiralen (5) zu der Richtung der Wicklungen (6) der Spiralen (5), die zu der Spirale (5) benachbart sind, entgegengesetzt ist, und dass der Schaber (11), nachdem er eine erste Spirale (5) gereinigt hat, zu einer nächsten Spirale (5) bewegt wird.

## Revendications

1. Dispositif (1) pour séparer des matières étrangères, telles que par exemple des mottes de terre, des pierres, des fanes et analogues de produits agricoles tels que des pommes de terre, des oignons et analogues, comprenant un cadre (2) dans lequel deux rouleaux sensiblement parallèles (3) sont montés de façon rotative, et dans lequel une spirale est agencée autour d'au moins une partie desdits rouleaux (3), dans lequel ledit dispositif (1) comprend un racloir (11) qui peut être déplacé dans une direction sensiblement parallèle auxdits rouleaux (3), dans lequel au moins un rail (21) est monté au-dessus desdits et de façon sensiblement parallèle auxdits rouleaux (3), rail sur lequel un élément de guidage (17) est monté de façon translatable, et dans lequel ledit racloir (11) est fixé audit élément de guidage (17) ou fait partie de celui-ci, **caractérisé en ce que** la direction des enroulements (6) de spirales voisines (5) est opposée, et **en ce qu'**une extrémité (12) dudit racloir (11) peut être placée entre les enroulements (6) d'au moins une partie desdites spirales (5), et ledit rail (21) est translatable de telle sorte que le racloir (11) puisse être déplacé d'un rouleau à un autre.

2. Dispositif (1) selon la revendication 1, dans lequel des capteurs sont prévus pour établir si le racloir (11) a atteint une extrémité du rail (21) ou s'est approché dudit rail (21) à une distance prédéterminée de celui-ci.

3. Dispositif (1) selon la revendication 2, dans lequel ledit rail (21) est translatable dans une direction sensiblement perpendiculaire à la direction desdits rouleaux (3).

4. Dispositif (1) selon la revendication 3, dans lequel des capteurs sont prévus pour établir si le racloir (11) a atteint un des rouleaux les plus extérieurs (3) ou s'est approché dudit rouleau à une distance prédéterminée de celui-ci.

5. Dispositif (1) selon l'une quelconque des revendications précédentes, dans lequel ledit racloir (11) est élastique.

6. Dispositif (1) selon la revendication 5, dans lequel ledit racloir (11) comprend un matériau de barre ou est constitué de celui-ci, dans lequel une spirale (13) est incorporée.

7. Ensemble (22) adapté pour être agencé sur ou dans un dispositif (1) selon le préambule de la revendication 1, comprenant au moins un rail (21) adapté pour être monté au-dessus desdits et sensiblement parallèle auxdits rouleaux (3), rail sur lequel un élément de guidage (17) est monté de façon translatable, ledit ensemble (22) comprenant un racloir (11) qui, une fois agencé, peut être translaté dans une direction sensiblement parallèle auxdits rouleaux (3), une extrémité (12) dudit racloir (11) pouvant être placée entre les enroulements (6) d'au moins une partie des spirales (5), ledit rail (21) étant translatable de telle sorte que le racloir puisse être déplacé d'un rouleau à l'autre.

8. Procédé pour séparer des matières étrangères, telles que par exemple des mottes de terre, des pierres, des fanes et analogues, qui sont présentes entre les enroulements (6) des spirales (5) d'un dispositif (1) selon le préambule de la revendication 1, comprenant au moins un rail (21) monté au-dessus desdits et de façon sensiblement parallèle auxdits rouleaux (3), rail sur lequel un élément de guidage (17) est monté de façon translatable, **caractérisé en ce que** lesdits rouleaux (3) et lesdites spirales (5) sont mises en rotation, l'extrémité (12) d'un racloir (11) est placée entre les enroulements (6) de l'une desdites spirales (5), et le racloir (11) est entraîné par la spirale (5) concernée, et **en ce que** la direction des enroulements (6) de chacune desdites spirales (5) est opposée à la direction des enroulements (6) des spirales (5) adjacentes à ladite spirale (5), et le racloir (11), une fois qu'il a nettoyé une première spirale (5), est déplacé jusqu'à une spirale suivante (5).
